# EUROPÄISCHE PATENTSCHRIFT

(11) **EP 2 289 349 B1**
(45) Veröffentlichungstag und Bekanntmachung des Hinweises auf die Patenterteilung: **07.10.2015**
(21) Anmeldenummer: 10008743.6
(22) Anmeldetag: 23.08.2010
(51) Int. Cl.: A23L 1/00, A23L 1/275, A23L 1/32

(54) **Behandlung von Eiern**
Egg treatment
Traitement des oeufs

(30) Priorität: 24.08.2009 DE 102009038394
(43) Veröffentlichungstag der Anmeldung: 02.03.2011
(73) Patentinhaber: Brauns-Heitmann GmbH & Co. KG, 34414 Warburg (DE)
(72) Erfinder: Gibbels, Dr. Uwe, 34414 Warburg, (DE)
(74) Vertreter: Geskes, Christoph

(56) Entgegenhaltungen:
- EP-A2- 1 604 836
- EP-A2- 1 629 726
- DE-A1-102005 006 957
- JP-A- 2006 291 061
- US-A- 5 787 838

## Beschreibung

Die vorliegende Erfindung betrifft ein Verfahren zur Behandlung von Eiern, wobei mindestens ein Färbemittel und/oder mindestens ein Überzugsmittel auf das Ei aufgebracht wird, sowie eine Vorrichtung zur Durchführung des Verfahrens.

Verfahren zur Behandlung von Eiern durch Einfärbung unter Verwendung von in Wasser und/oder verdünnter Säure, vorzugsweise Essigsäure, löslichen Lebensmittelfarben sind seit vielen Jahren bekannt.

EP 1 604 836 A2 offenbart ein Verfahren zur Färbung von Eiern mit einem Glitzereffekt, mit welchem Eier einfach und sicher mit einem wertigen und effektvollen Effekt versehen werden können, wobei das Ei neben einer Färbung zusätzlich mit einem Glitzereffekt versehen wird derart, dass Partikel von einer Folie auf der Eioberfläche übertragen werden, wobei die Übertragung der Partikel durch ein auf dem Ei aufgebrachtes Klebemittel sichergestellt wird.

Beispielsweise wird in US 4,181,745 ein Verfahren zum Färben von Eierschalen beschrieben, bei dem ein färbendes Medium unter Verwendung eines Salzes, eines Färbemittels und eines Hydratationsmittels in Form von Wasser oder Essig zur Aktivierung des Färbemittels verwendet wird, anschließend eine Trocknung der Mischung erfolgt, um das färbende Medium in einer trockenen, körnigen Form zu erhalten. Beschrieben wird weiterhin ein Behältnis in Form eines Sackes zur Aufnahme des färbenden Medium sowie des Hydratationsmittels und eines Eies, wobei das Ei in der sich bildenden Farbflüssigkeit bewegt werden kann, um die Farbgebung zu erhalten.

Bei den bisher bekannten Methoden zur Behandlung von Eiern, insbesondere zum Zwecke der Färbung, sind zum einen konzentrierte Farbstofflösungen erforderlich, um die gewünschte Färbung des Eies innerhalb eines kurzen Zeitraumes zu erhalten. Je nach Farbstoffkonzentration kann das Einfärben der Eier zwischen 5 bis 15 Minuten betragen. Andererseits führt eine sehr unterschiedliche Struktur der Eierschale auf Grund ihrer Porosität zu recht unterschiedlichen Farberscheinungen, die zudem eine geringe Beständigkeit gegenüber Wasser haben, so dass ein Kontakt des Eies mit feuchten Oberflächen zu Verfärbungen der Hände führen kann. Insbesondere im Falle blauer Farbstoffe, wie beispielsweise Patentblau und FDC-Blau, entstehen bei der Handhabung der Eier sehr unangenehme und fest haftende blaue Verfärbungen auf der Haut. Daneben bewirken Risse und schadhafte Stellen innerhalb der Eierschale ein Eindringen der Farbstoffe in das Ei-Innere, wodurch ein eher unappetitlicher Eindruck für den Konsumenten des Eies entsteht.

Es wäre daher wünschenswert, Eier mit einem geringeren Arbeitsaufwand behandeln zu können und dabei gleichzeitig intensive und wasserbeständige Farbeffekte auf der Eierschale erzeugen zu können.

Es ist daher Aufgabe der vorliegenden Erfindung, ein Verfahren zur Verfügung zu stellen, mit welchem ein Ei schnell und einfach behandelt werden kann, um die gewünschten Farbeffekte auf der Oberfläche der Eierschale dauerhaft zu erhalten.

Zur Lösung dieser Aufgabe schlägt die vorliegende Erfindung ein Verfahren zur Behandlung von Eiern vor, wobei über mindestens ein flächiges Material mindestens ein alkoholbasiertes Färbemittel und/oder mindestens ein alkoholbasiertes Überzugsmittel auf das Ei übertragen wird, wobei das alkoholbasierte Färbemittel und/oder alkoholbasierte Überzugsmittel mindestens ein alkoholbasiertes Lösemittel und mindestens einen Trägerstoff für einen Farbstoff und/oder ein Farbpigment und/oder einen Farbpartikel im Falle des alkoholbasierten Färbemittels beziehungsweise mindestens eine Lackkomponente im Falle des alkoholbasierten Überzugsmittels umfassen, wobei zur Herstellung des alkoholbasierten Färbemittels und/oder des alkoholbasierten Überzugsmittels Ethanol verwendet wird, und wobei der mindestens eine Trägerstoff beziehungsweise die mindestens eine Lackkomponente ausgewählt ist aus einer Gruppe umfassend Schellack und/oder Kopal, wobei der mindestens eine Trägerstoff beziehungsweise die mindestens eine Lackkomponente in einer Menge in einem Bereich von 2 Gew.-% bis 30 Gew.-%, bezogen auf das Gesamtgewicht des alkoholbasierten Färbemittels beziehungsweise des alkoholbasierten Überzugsmittels, eingesetzt wird.

Eine Ausführungsform der Erfindung sieht vor, dass zumindest ein flächiges Material, welches auf mindestens einer Seite mit mindestens einem alkoholbasierten Färbemittel und/oder mit mindestens einem alkoholbasierten Überzugsmittel versehen ist, zur Verfügung gestellt wird.

Eine weitere Ausführungsform der Erfindung sieht vor, dass vor Übertragung des alkoholbasierten Färbemittels und/oder des alkoholbasierten Überzugsmittels durch das flächige Material das flächige Material auf mindestens einer Seite mit mindestens einem alkoholbasierten Färbemittel und/oder mit mindestens einem alkoholbasierten Überzugsmittel versehen wird.

Der Vorteil der Erfindung besteht darin, das durch ein derartiges Aufbringen des alkoholbasierten Färbemittels und/oder des alkoholbasierten Überzugsmittels auf das Ei eine erhebliche Zeitverkürzung für die Behandlung von Eiern, insbesondere für das Osterfest, verbunden mit einem verbesserten Färbeeffekt eintritt. Da ein derart behandeltes Ei innerhalb von Sekunden getrocknet ist, ist der Benutzer nach kurzer Zeit in der Lage, das Ei in die Hand zu nehmen, wobei vorzugsweise die Farbe des Eies beständig gegenüber der natürlichen Hautfeuchtigkeit ist.

Ein weiterer Vorteil der Erfindung besteht darin, dass mit dem erfindungsgemäßen Verfahren und der erfindungsgemäßen Vorrichtung auch Eier behandelt werden können, die beispielsweise in einem herkömmlichen Verfahren gefärbt worden sind, vorzugsweise in einem Tauchverfahren. Derartige Eier können sowohl mit dem alkoholbasierten Überzugsmittel als auch mit dem alkoholbasierten Färbemittel unter Verwendung des flächigen Materials behandelt werden, um beispielsweise besondere Farb-, Licht- oder Oberflächeneffekte auf der Eierschale zu erzeugen. Bevorzugt wird dabei das mindestens eine Überzugsmittel als letztes aufgebraucht, z.B. nach der Färbung der Eier im Tauchbad wodurch dann eine Übertragung der Farbe auf die Hände des Nutzers des Eies reduziert wird.

Dabei kann das erfindungsgemäße Verfahren sehr einfach und sicher und damit insbesondere auch von Kindern durchgeführt werden.

Alkoholbasierte Färbemittel im Sinne der vorliegenden Erfindung können beispielsweise
- lösliche oder teilweise lösliche Farbstoffe, vorzugweise löslich in alkoholbasierten Lösemitteln,
- in alkoholbasierten Lösemitteln schlecht lösliche bzw. unlösliche Farbstoffe und/oder Farbpigmente und/oder Farbpartikel, oder
- Kombinationen aus diesen
aufweisen.

Umfasst hiervon sind insbesondere natürliche oder synthetische Farbstoffe und/oder Farbpigmente und/oder Farbpartikel, die für den Einsatz in oder an Lebensmitteln geeignet sind. Das alkoholbasierte Färbemittel im Sinne der Erfindung kann auch eine Mischung verschiedener Färbemittel, aufweisend mindestens ein alkoholbasiertes Färbemittel, insbesondere zur Erzeugung von Mischfarben, sein.

Nach einer bevorzugten Ausführungsform der Erfindung umfasst das Verfahren zur Behandlung von Eiern zumindest die folgenden Schritte:
- Bereitstellen mindestens eines flächigen Materials,
- In-Kontakt-Bringen des Eies mit mindestens einem flächigen Material und
- Übertragung des alkoholbasierten Färbemittel und/oder des alkoholbasierten Überzugsmittels auf das Ei.

Eine Ausführungsform des Verfahrens sieht vor, dass verfahrensgemäß das alkoholbasierte Überzugsmittel auf das Ei übertragen wird derart, dass das Überzugsmittel vor dem Auftrag und/oder während des Auftrags und/oder nach dem Auftrag eines Färbemittels, vorzugsweise des alkoholbasierten Färbemittels auf das Ei übertragen wird.

Das alkoholbasierte Überzugsmittel kann auch auf Eier übertragen werden, die nach einem herkömmlichen Färbeverfahren, beispielsweise einem Tauchverfahren gefärbt worden sind, Indem der Überzug anschließend mittels des flächigen Materials auf das Ei übertragen wird.

In einer weiteren Ausführungsform der Erfindung ist ein Verfahren vorgesehen, dass das In-Kontakt-Bringen des Eies mit dem alkoholbasierten Färbemittel und/oder dem alkoholbasierten Überzugsmittel mehrfach erfolgen kann.

Zwischen dem Aufbringen des alkoholbasierten Färbemittels auf das Ei und dem Aufbringen des Überzugsmittels auf das Ei kann ein Trocknungsvorgang, beispielsweise mittels Luftanblasung oder Lagerung des Eies über einen kurzen Zeitraum erfolgen, damit flüchtige Bestandteile des alkoholbasierten Färbemittels und/oder des Überzugsmittels entweichen können. Die Trocknung kann bei Raumtemperatur in der Umgebungsluft oder in einem höheren Temperaturbereich, beispielsweise in einem Trockenschrank, erfolgen.

Bei dem erfindungsgemäßen Verfahren kann das In-Kontakt-Bringen des Eies mit dem alkoholbasierten Färbemittel und/oder dem Überzugsmittel unter Verwendung des flächigen Materials mehrfach erfolgen, um die gewünschten Farbeffekte zu erhalten. Es ist ebenfall möglich, das flächige Material für die Einfärbung mehrerer Eier zu verwenden.

In einer bevorzugten Ausführung des Verfahrens kann das flächige Material als ein Vlies ausgebildet werden, wobei zur Bildung des Vlieses vorwiegend natürliche Fasern und hierbei vorzugsweise Papierfasern genutzt werden können. Das Vlies kann ebenfalls unter Verwendung von synthetischen Fasern, vorzugsweise Polymerfasern und/oder Kombinationen aus natürlichen und synthetischen Fasern ausgebildet werden.

Das flächige Material weist dabei vorzugsweise einen flexiblen Charakter auf, d.h. es hat gute Griffeigenschaften und lässt sich durch den Benutzer ausgezeichnet handhaben, indem das Ei mit dem flächigen Material umhüllt werden kann, In diesem gerollt werden kann oder das flächige Material In zusammengelegter Form zur Betupfung des Eies genutzt werden kann.

Zur Herstellung eines Vlieses auf Polymerbasis können jegliche fadenbildenden Polymere, die in ihrer Schmelze oder Lösung Eigenschaften aufweisen, welche die Bedingungen der Verspinnbarkeit erfüllen, eingesetzt werden. Beispielsweise sind Polymere aus der Gruppe der Polyolefine als Homopolymere oder Blends, Polyamide, Polyester, abbaubare Polymere, beispielsweise auf Polymilchsäurebasis oder Stärkebasis, zur Herstellung dieser Vliese geeignet Als natürliche Fasern werden Fasern, vorwiegend umfassend Cellulose, Baumwolle, Leinen, Flachs oder Alginate bevorzugt.

Als vortellhaft für die Behandlung von Eiern haben sich beispielsweise
- Vliese mit einem überwiegenden Anteil an Papierfasern,
- Vliese auf Polyolefinbasis unter Verwendung von Hydrophilierungsmitteln oder
- Vliese auf Polymerbasis mit einem Anteil an natürlichen Fasern
erwiesen.

Verfahrensgemäß kann das flächige Material auch ein- oder mehrlagig ausgebildet werden.

Als einlaglg ausgebildete Materialien können beispielsweise Filterpapiere oder Vliesstoffe aus Fasern und/oder Filamenten, aus Stapel- oder Endlosfäden, die beispielsweise nach einem Spunbondverfahren oder Meltblowverfahren oder Kardierverfahren oder einem Naßspinnverfahren erzeugt worden sind, zur Herstellung des erfindungsgemäßen flächigen Materials für die Behandlung von Eiern verwendet werden.

Mehrlagige Vliese können beispielsweise auf Polymerbesis ausgebildet werden, wobei zudem Zwischenlagen ausgebildet werden können, die überwiegend oder vollständig aus natürlichen Fasern ausgebildet worden sind. Andererseits kann eine Lage eines Vlieses, welche überwiegend oder vollständig aus natürlichen Fasern gebildet wird, in einem flächigen Material auch als eine Außenlage eines mehrlaglgen Gebildes in Form eines Laminats angeordnet werden. Alternativ zu Vliesstoffen oder Lagen aus Papier sind auch poröse Filmschichten zur Herstellung von mehrschichtigen flächigen Materialien möglich. Übllche Flächengewichte der Vliese oder Filterpapiere können zwischen 10 bis 200 g/m² liegen, wobei mehrlagige Gebilde in separaten Verarbeitungsprozessen oder in einem Verarbeitungsprozess, beispielsweise inline erzeugt werden können. Die Faser- oder Filamentdurchmesser können im Bereich von weniger als 0,001 mm bis mehr als 0,2 mm liegen, wobei die Faserquerschnitte rund, nlchtrund, beispielsweise elliptisch, rechteckig, vieleckig oder multilobal, vorzugsweise trilobal ausgebildet werden können. Die Fasern und/oder Filamente können als Monofilamente oder Mehrkomponentenfilamente ausgebildet werden. Die Bindung der Fasern innerhalb des Vlieses kann durch Thermobonding, adhäsives Bonding, beispielsweise mittels Schmelzkleber oder Vemadelung, Wasserstrahlverfestigung und dergleichen erfolgen.

Sowohl die Gestaltung der Faserquerschnitte, der Dicke und des Lagenaufbaues des flächigen Materials als auch die Kombination von natürlichen und synthetischen Fasern haben in Bezug auf eine Erhöhung der Aufnahmefähigkeit und des Rückhaltevermögens des flächigen Materials für das alkoholbasierte Färbemittel und/oder das Überzugsmittel einen Einfluss. So kann ein leicht handhabbares Vlies zur Verfügung gestellt werden. Zugleich kann ein Abtropfen des im Vlies vorhandenen überschüssigen Färbemittels und/oder Überzugsmittel vermieden werden, so dass das Vlies mehrfach zur Behandlung von Eiern verwendet werden kann ohne dass das Färbemittel und/oder das Überzugsmittel auf die Hände des Benutzers gelangt.

Vorzugsweise werden auf das flächige Material ein alkoholbasiertes Färbemittel und/oder ein alkoholbasiertes Überzugsmittel in Form eines Lackes in einem Gewichtsverhältnis von Färbemittel und/oder Überzugsmittel zum flächigen Material in einem Bereich von 0,5 bis 5, vorzugsweise 1 bis 4,5, besonders bevorzugt 2 bis 4 aufgetragen.

Das flächige Material kann auch aus unterschiedlichen Materialien hergestellt sein und beispielsweise eine Kaschierung auf einer Seite mit einer Färbemittel-undurchlässigen Folie oder einem Film aufweisen, so dass sichergestellt ist, dass bei richtiger Anwendung des flächigen Materials die Hände des Anwenders sauber bleiben. Dies kann auch erreicht werden durch Versehung des flächigen Materials nur auf einer Seite desselben mit mindestens einem alkoholbasierten Färbemittel und/oder Überzugsmittel und einer Einstellung der Vlieseigenschaften dergestalt, dass das Färbemittel und/oder Überzugsmittel nicht bis auf die andere Seite des flächigen Materials durchdringt.

Erfindungsgemäß weist das in dem erfindungsgemäßen Verfahren zur Behandlung von Eiern eingesetzte mindestens eine alkoholbasierte Färbemittel und/oder mindestens eine alkoholbasierte Überzugsmittel mindestens ein alkoholbasiertes Lösemittel, vorzugsweise Ethanol, und mindestens einen Trägerstoff (im Falle eines alkoholbasierten Färbemittels) beziehungsweise mindestens eine Lackkomponente (im Falle eines alkoholbasierten Überzugsmittels) auf. Erfindungsgemäß ist der mindestens eine Trägerstoff beziehungsweise die mindestens eine Lackkomponente ausgewählt aus einer Gruppe umfassend Schellack und/oder Kopal. Erfindungsgemäß werden als Trägerstoff beziehungsweise Lackkomponente Schelllack und/oder Kopal verwendet. Erfindungsgemäß ist der mindestens eine Trägerstoff beziehungsweise die mindestens eine Lackkomponente in einer Menge in einem Bereich von 2 Gew.-% - 30 Gew.-%, bevorzugt in einem Bereich von 2,5 Gew.-% bis 30 Gew.%, noch weiter bevorzugt in einem Bereich von 5 Gew.-% bis 20 Gew.%, weiter bevorzugt in einem Bereich von 10 Gew.-% bis 15 Gew.-%, und noch weiter bevorzugt in einem Bereich von 10 Gew.-% bis 12,5 Gew.-%, jeweils bezogen auf das Gesamtgewicht des alkoholbasierten Färbemittels beziehungswelse des alkoholbasierten Überzugsmittels, eingesetzt. Die vorstehenden Angaben gelten ebenso in Hinblick auf die erfindungsgemäße Vorrichtung, als auch das erfindungsgemäße alkoholbasierte Färbemittel und das erfindungsgemäße alkoholbasierte Überzugsmittel.

In einer Ausführungsform des Verfahrens kann zur Herstellung des alkoholbasierten Färbemittels
- mindestens ein Farbstoff und/oder mindestens ein Farbpigment und/oder mindestens ein Farbpartikel,
- mindestens ein Trägerstoff für den Farbstoff und/oder das Farbpigment und/oder die Farbpartikel, und
- mindestens ein alkoholbasiertes Lösemittel
verwendet werden.

Bevorzugt wird der mindestens eine Trägerstoff des Farbpartikels ausgewählt aus einer Gruppe umfassend Schellack und/oder Kopal. Besonders bevorzugt werden dabei Schellack und Kopal entweder jeweils allein oder in Kombination als Trägerstoff für die Herstellung des alkoholbasierten Färbemittels eingesetzt. Zur Herstellung des alkoholbasierten Lösemittels wird vorzugsweise Ethanol verwendet.

Eine Ausführungsform der Erfindung sieht vor, dass bei dem Verfahren zur Herstellung des alkoholbasierten Färbemittels als Farbstoff mindestens ein Lebensmittelfarbstoff, ausgewählt aus der Gruppe umfassend Curcumln, Patentblau, FDC-Blau und/oder Erythrosin, verwendet wird.

Da das Curcumin nur eine sehr begrenzte Lichtbeständigkeit besitzt, ist es erfindungsgemäß auch vorgesehen, gelbe Farbstoffe, beispielsweise Riboflavin, Riboflavin-5'-Phosphat, Tartrazin, Chinolingelb, Sunsetgelb FCF oder Gelborange S einzusetzen, die eine geringere Löslichkeit in Alkohol aufweisen als Curcumin, so dass der gelbe Farbton eines derart gefärbten Eies hierdurch über einen längeren Zeitraum erhalten bleibt.

In einer weiteren Ausführungsform der Erfindung kann das alkoholbasierte Färbemittel Bestandteile aufweisen, insbesondere Lebensmittelfarbstoffe, die eine geringe Löslichkeit gegenüber Alkohol aufweisen. So können dem alkoholbasierten Färbemittel beispielsweise Farbpartikel beigemengt werden, die besondere Effekte bei der Farbgebung erzeugen oder eine bessere Licht- bzw. UV-Beständigkeit hervorrufen.

Eine Ausführungsform der Erfindung sieht vor, dass das alkoholbasierte Färbemittel, welches auf das flächige Material aufgebracht wird, mindestens einen Farbstoff und/oder mindestens ein Farbpigment und/oder mindestens Farbpartikel und mindestens einen Trägerstoff für das alkoholbasierte Färbemittel und/oder das Farbpigment und/oder die Farbpartikel und mindestens ein alkoholbasiertes Lösemittel aufweist.

Farbpigmente oder Farbpartikel im Sinne der Erfindung können insbesondere aus Metallen, Kunststoffen oder keramischen Bestandteilen und/oder Kombinationen aus diesen gebildet werden. Bevorzugt werden Effektpigmente, mit denen sich ein metallischer Glanz erzeugen lässt. Daneben können Metallpartikel sowohl als reine Metalle als auch als Legierungen eingesetzt werden. Zu nennen sind hier als Metalle insbesondere Gold, Silber, Chrom, Nickel, Aluminium, Zinn oder Zink und als Metalllegierungen Gold- und Silberleglerungen sowie insbesondere Chrom-Nickel-Legierungen.

Besonders bevorzugt werden im Sinne dieser Erfindung beispielsweise Schicht-Substrat-Pigmente, beschrieben von Maisch und Weigand in "Perlglanzpigmente, Physikalische Grundlagen, Eigenschaften, Anwendungen, Die Bibliothek der Technik, Band 56, Verlag Moderne Industrie", wie beispielsweise Perlglanz-, Interferenz-, Farbglanz- oder Kombinationspigmente, wie beispielsweise Glimmer-Metalloxidpigmente, vorzugsweise Glimmer-Titandioxid-Pigmente oder Glimmer-Eisenoxid-Pigmente, vorzugsweise basierend auf Hämatit.

Hierbei dient Glimmer als transparentes, chemisch inertes, temperaturstabiles und preiswertes Substrat, welches mit Metalloxiden, die einen genügend hohen Brechungsindex aufweisen und in transparenter Form auf das Substrat aufbringbar sind, beschichtet ist. Eisenoxid in der Modifikation Hämatit hat beispielsweise einen Brechungsindex von n= 2,9. Durch Variation der Schichtdicken des Titandioxids und/oder des Eisenoxids kann eine Vielzahl von Farben und Interferenzeffekten erzeugt werden, die in dem Färbemittel von Gelb über Rot, Rotbraun, Violett oder Blau bis hin zum Grün reicht. Zudem ist eine unbegrenzte Zahl von unterschiedlichen Schattierungen auf der Oberfläche eines Eies möglich, die sich in Abhängigkeit von dem Betrachtungswinkel ändern kann.

Ebenfalls bevorzugt wird ein auf Kaliumaluminiumsilikat und Titanoxid basiertes Perlglanzpigment (z.B. Candurin® Gold Lustre der Fa. Merck) eingesetzt.

Bevorzugt werden ebenfalls Lebensmittelfarbstoff-Pigmente, vorzugsweise umfassend Aluminiumoxid, auf deren Oberfläche Lebensmittelfarbstoffe durch Adsorption gebunden sind. Diese Farbpigmente lassen sich nur ungleichmäßig auf einem flächigen Material verteilen, wodurch sehr interessante Farbeffekte auf einem EI erzeugt werden können, insbesondere dann, wenn nach dem Auftragen dieser Lebensmittelfarbstoff-Pigmente auf das Ei ein weiterer Auftrag eines Färbemittels erfolgt, dem beispielsweise Gold-Effektpigmente beigemengt sind. Dabei kann beobachtet werden, dass das flächige Material in Form eines Vliestuches, auf welches zuvor das Gold-Effektpigmente enthaltende Färbemittel aufgebracht wird, beim Übertragen des Färbemittels auf ein bereits eingefärbtes Ei durch Einreiben des Eies mit diesem Tuch nur wenige Spuren des zuvor auf das Ei aufgebrachten Färbemittels aufweist.

Ebenfalls können Kunststoffe und/oder Lack-Pigment-Formulierungen für die Farbpartikel verwendet werden, die beispielsweise aus der für die Schreibmaschinentechnik bekannten Farbbandmaterialien bekannt sind.

In einer weiteren vorteilhaften Ausbildung des Verfahrens werden zur Herstellung des alkoholbasierten Färbemittels
- mindestens ein Farbstoff in einem Bereich zwischen 0,01 Gew.-% bis 3 Gew.-% und/oder mindestens ein Farbpigment und/oder mindestens ein Farbpartikel in einem Bereich zwischen 1 Gew.-% bis 15 Gew.-%, bevorzugt 5 Gew.-% - 15 Gew.-%, weiter bevorzugt 10 Gew.-% -15 Gew.-%,
- mindestens ein Trägerstoff in einem Bereich zwischen 2,5 Gew.-% bis 30 Gew.-% und
- mindestens ein alkoholbasiertes Lösemittel in einem Bereich zwischen 65 Gew.-% bis 97 Gew.-%,
verwendet, wobei die Gewichtsprozente jeweils bezogen sind auf das Gesamtgewicht des Färbemittels.

Vorzugsweise werden bei dem Verfahren zur Herstellung des alkoholbasierten Färbemittels
- mindestens ein Farbstoff in einem Bereich zwischen 0,035 Gew.-% bis 1 Gew.-%, besonders bevorzugt zwischen 0,5 Gew.-% bis 1 Gew.-%, und/oder mindestens ein Farbpigment und/oder mindestens ein Farbpartikel in einem Bereich zwischen 1 Gew.-% bis 15 Gew.-%, bevorzugt 5 Gew.-% -15 Gew.-%, weiter bevorzugt 10 Gew.-% - 15 Gew.-%,
- mindestens ein Trägerstoff in einem Bereich zwischen 5 Gew.-% bis 20 Gew.-%, besonders bevorzugt zwischen 10 Gew.-% bis 12,5 Gew.-% und
- mindestens ein alkoholbasiertes Lösemittel, vorzugsweise Ethanol in einem Bereich zwischen 75 Gew.-% bis 95 Gew.-%, besonders bevorzugt zwischen 87 Gew.-% bis 90 Gew.-%
verwendet, wobei die Gewichtsprozente jeweils bezogen sind auf das Gesamtgewicht des Färbemittels.

Eine weitere Ausführungsform des erfindungsgemäßen Verfahrens sieht vor, dass zur Herstellung des alkoholbasierten Überzugsmittels,
- mindestens eine Lackkomponente, vorzugsweise Schellack und/oder Kopal, in einem Bereich zwischen 2 Gew.-% bis 30 Gew.-%, und
- mindestens ein alkoholbasiertes Lösemittel, vorzugsweise Ethanol, in einem Bereich zwischen 70 Gew.-% bis 98 Gew.-%,
verwendet werden, wobei die Gewichtsprozente jeweils bezogen sind auf das Gesamtgewicht des Überzugsmittels.

In einer besonders bevorzugten Ausführungsform der Erfindung sieht das Verfahren vor, dass zur Herstellung des Überzugsmittels
- mindestens eine Lackkomponente, vorzugsweise Schellack und/oder Kopal, in einem Bereich zwischen 5 Gew.-% bis 20 Gew.-%, besonders bevorzugt zwischen 10 Gew.-% bis 15 Gew.-%, und
- ein alkoholbasiertes Lösemittel, vorzugsweise Ethanol, in einem Bereich zwischen 80 Gew.-% bis 95 Gew.-%, besonders bevorzugt zwischen 85 Gew.-% bis 90 Gew.-%,
verwendet werden, wobei die Gewichtsprozente jeweils bezogen sind auf das Gesamtgewicht des Überzugsmittels.

Das Überzugsmittel kann als Klarlack oder als Lack mit Zusätzen auf das zur Behandlung eines Eies vorgesehene flächige Material aufgebracht werden oder auf diesem bereits vorgesehen sein.

Außer Ethanol können weitere alkoholbasierte Lösemittel allein oder in Kombination und In unterschiedlichen Konzentrationen zur Herstellung das alkoholbasierten Färbemittels und/oder des Überzugsmittels zur Behandlung von Eiern verwendet werden.

Vorteilhafterweise erfolgt verfahrensgemäß das Aufbringen des alkoholbasierten Färbemittels und/oder des Überzugsmittels auf das flächige Material durch Übertragen, beispielsweise in einem Beschichtungsvorgang, beispielsweise durch Rakeln, Besprühen, Pflatschen oder Extrudieren. Daneben sind andere Verfahren zur Imprägnierung des flächigen Materials möglich, beispielsweise Tauchen oder Kiss-Roll-Verfahren.

Es hat sich bei der Behandlung von Eiern, die eine poröse Schale aufweisen bzw. bei Eierschalen, die beispielsweise durch den Kochvorgang rissig geworden sind, als vorteilhaft erwiesen, das Ei vor der Behandlung mit dem alkoholbasierten Färbemittel mit dem Überzugsmittel in Form eines Klarlacks oder als Lack mit Zusätzen zu versehen. Der Lack kann je nach Zusammensetzung und in Abhängigkeit von der Temperatur des Eies in die Poren oder Risse der Eierschale eindringen und diese verschließen, so dass ein Durchfärben der Eier bei dem anschließenden Auftragen des alkoholbasierten Färbemittels vermieden werden kann.

Zudem wird durch die Versiegelung der Eierschale eine Vergleichmäßigung der Oberfläche des Eies erreicht, die zu einer gleichmäßigen Farbgestaltung führt. Außerdem kann durch den Verschluss der Poren und Risse der Eierschale die Haltbarkeit des Eies erhöht werden.

Bei der Behandlung von Eiern, die keine Risse aufweisen und eine feinporige strukturierte Schale besitzen, kann insbesondere der Lack- und Farbauftrag gleichzeitig erfolgen, aber auch der Lackauftrag weggelassen werden. Dadurch können besondere farbliche Effekte innerhalb eines sehr kurzen Zeitraumes erzeugt werden. Alternativ hierzu kann das Auftragen des Lackes auch nach dem Auftragen des alkoholbasierten Färbemittels erfolgen.

Erfindungsgemäß umfasst eine Vorrichtung zur Behandlung von Eiern mindestens ein, auf mindestens einer Seite mit mindestens einem erfindungsgemäßen alkoholbasierten Färbemittel und/oder einem erfindungsgemäßen mindestens einem alkoholbasierten Überzugsmittel versehenes flächiges Material.

Eine bevorzugte Weiterbildung der erfindungsgemäßen Vorrichtung sieht vor, dass das alkoholbasierte Färbemittel
- mindestens einen Farbstoff in einem Bereich zwischen 0,01 Gew.-% bis 3 Gew.-% und/oder mindestens ein Farbpigment und/oder mindestens ein Farbpartikel in einem Bereich zwischen 1 Gew.-% bis 15 Gew.-%, bevorzugt 5 Gew.-% - 15 Gew.-%, weiter bevorzugt 10 Gew.-% - 15 Gew.-%,
- mindestens einen Trägerstoff in einem Bereich zwischen 2,5 Gew.-% bis 30 Gew.-% und
- mindestens ein alkoholbasiertes Lösemittel in einem Bereich zwischen 65 Gew.-% bis 97 Gew.-%
umfasst, wobei die Gewichtsprozente jeweils bezogen sind auf das Gesamtgewicht des Färbemittels.

Eine vorteilhafte Weiterbildung der erfindungsgemäßen Vorrichtung sieht vor, dass ein Lebensmittelfarbstoff ausgewählt ist aus der Gruppe umfassend Curcumin, Patentblau, FDC-Blau oder Erythrosin.

Erfindungsgemäß ist ebenfalls vorgesehen, dass das alkoholbasierte Färbemittel weitere Bestandteile aufweist, insbesondere Lebensmittelfarbstoffe, die eine geringe Löslichkeit gegenüber Alkohol aufweisen, vorzugsweise Rlboflavin, Riboflavin-5-Phosphat, Tartrazin, Chinolingelb, Sunsetgelb FCF oder Gelborange S.

Erfindungsgemäß weist die Vorrichtung als Trägerstoff für das alkoholbasierte Färbemittel vorzugsweise Schellack und/oder Kopal auf.

In einer Weiterbildung der erfindungsgemäßen Vorrichtung ist vorgesehen, dass das flächige Material ein alkoholbasierter Überzugsmittel aufweist, umfassend
- mindestens eine Lackkomponente, vorzugsweise Schellack und/oder Kopal, in einem Bereich zwischen 2 Gew.-% bis 30 Gew.-%, und
- mindestens ein alkoholbesiertes Lösemittel, vorzugsweise Ethanol, in einem Bereich zwischen 70 Gew.-% bis 98 Gew.-%,
wobei die Gewichtsprozente jeweils bezogen sind auf das Gesamtgewicht des Oberzugsmittels.

In einer weiter bevorzugten Ausführungsform der Erfindung weist die Vorrichtung ein flächlges Material in Form eines Vlieses auf, welches vorwiegend natürliche Fasern, vorzugsweise Papierfasern und/oder synthetische Fasern, vorzugsweise Polymerfasern und/oder Kombinationen hieraus umfasst. Dabei kann das flächige Material ein- oder mehrlagig ausgebildet sein.

In einer Ausführungsform der Erfindung ist ein alkoholbasiertes Färbemittel zur Behandlung von Eiern vorgesehen, umfassend
- mindestens einen Farbstoff in einem Bereich zwischen 0,01 Gew.-% bis 3 Gew.-% und/oder mindestens ein Farbpigment und/oder mindestens einen Farbpartikel in einem Bereich zwischen 1 Gew.-% bis 15 Gew.-%, bevorzugt 5 Gew.-% 15 Gew.-%, weiter bevorzugt 10 Gew.-% 15 Gew.-%,
- mindestens einen Trägerstoff in einem Bereich zwischen 2,5 Gew.-% bis 30 Gew.-%; und
- mindestens ein alkoholbasiertes Lösemittel in einem Bereich zwischen 65 Gew.-% bis 97 Gew.-%,
wobei die Gewichtsprozente jeweils bezogen sind auf das Gesamtgewicht des Färbemittels.

Eine weitere Ausführungsform der Erfindung sieht ein alkoholbasiertes Überzugsmittel zur Behandlung von Eiern vor, umfassend
- mindestens eine Lackkomponente, vorzugsweise Schellack und/oder Kopel, In einem Bereich zwischen 2 Gew.-% bis 30 Gew.-%, und
- mindestens ein alkoholbasiertes Lösemittel, vorzugsweise Ethanol in einem Bereich zwischen 70 Gew.-% bis 98 Gew.-%,
wobei die Gewichtsprozente jeweils bezogen sind auf das Gesamtgewicht des Überzugsmittels.

Schließlich betrifft die vorliegende Erfindung eine Verwendung eines flächigen Materials, welches mit der erfindungsgemäßen Vorrichtung hergestellt ist, zur Behandlung von Eiern durch Übertragung eines alkoholbasierten Färbemittels und/oder eines Überzugsmittels auf ein Ei.

Das alkoholbasierte Färbemittel und/oder der Lack bzw. das Überzugsmittel, das den späteren Überzug auf der Eierschale bildet, können auf verschiedene Weise auf und/oder in dem flächigen Material angeordnet sein. Beispielsweise kann ein Vliestuch mit alkoholbesierten Färbemittel und ein weiteres Vliestuch mit Überzugsmittel beschichtet sein. In einer anderen Ausführung der Erfindung kann ein Vliestuch unterschiedliche Auftragssysteme aufweisen, wobei in ersten Bereichen des Vliestuchs ein alkoholbasiertes Färbemittel und in zweiten Bereichen ein Überzugsmittel aufgebracht ist und wobei die Bereiche derart getrennt voneinander angeordnet sind, dass ein Verlaufen der beiden Auftragssysteme vermieden wird. Für die Auftragssysteme von Färbemittel und Lack sind beliebige Anordnungen, beispielsweise in voneinander beabstandeten Streifen möglich.

Daneben kann die Vorrichtung zur Behandlung von Eiern als Set derart konfiguriert sein, dass beispielsweise ein oder mehrere flächige Materialien, beispielsweise in Form von Tüchern, vorzugsweise aus Vliesstoff, in einem oder mehreren vorzugsweise aluminiumkaschierten Folienbeuteln angeordnet sind und eine oder mehrere alkoholbasierte Färbemittel und/oder ein oder mehrere Überzugsmittel in Form eines Lackes als Klarlack oder Lack mit Zusätzen aufweisen. Beispielsweise kann ein etwa handflächengroßes Vliestuch 2 g bis 3 g eines alkoholbasierten Färbemittels und/oder eines Lackes beinhalten. Ein derartiges Set kann zudem Handschuhe zur einfacheren und sicheren Handhabung der Vliestücher beinhalten.

Bei der Benutzung eines derartigen Sets zieht der Nutzer beispielsweise die Handschuhe an, öffnet anschließend ein oder mehrere Behältnisse, vorzugsweise in Form von Folienbeuteln, entnimmt und entfaltet ein oder mehrere Vliestücher und rollt die Eier, die im rohen Zustand vorliegen können oder zuvor gekocht worden sind, so lange in diesen Tüchern, bis der gewünschte Farbeffekt und/oder Überzug auf der Eierschale erkennbar ist. Je nach gewünschter Intensität der Färbung oder der Lackierung der Eierschale kann das Ei in dem Tuch entweder gerollt werden oder mit diesem nur betupft werden.

Weitere vorteilhafte Ausgestaltungen und Weiterbildungen der vorliegenden Erfindung werden anhand der nachfolgenden Beispiele näher erläutert. Die dabei dargelegten Merkmale können mit den weiter oben beschriebenen Merkmalen zu zusätzlichen Weiterbildungen führen, die im einzelnen jedoch hier nicht aufgeführt werden.

### Eingesetzte Materialien und Versuchsbeschreibung:

Zur Behandlung von Eiern wurden
- spezielle Färbesysteme unter Verwendung der Farbstoffe Patentblau (E131), FDC-Blau (E133), Curcumin (E100) und Erythrosin (E127) sowie Schellack und/oder Kopal und Ethanol und
- Überzugsysteme bzw. Überzugsmittel In Form von Lacken unter Verwendung von Schellack (E 904) oder Kopal in Verbindung mit Ethanol
   hergestellt.

In der Tabelle 1 wird ein Überblick über die jeweiligen Färbe- bzw. Überzugssysteme gegeben, wobei die Durchfärbung der Eierschalen und das Abfärbeverhalten der alkoholbasierten Färbemittel von den Eiern auf die Hände des Benutzers geprüft worden sind. Die verwendeten Gewichtsprozentangaben beziehen sich auf die Gesamtmenge des Färbemittels beziehungsweise des Überzugsmittels. Neben den Rezepturnummem und den laufenden Nummern der Versuche sind die Einzelbestandtelle der Rezepturzusammensetzungen angegeben. Eier, die mit Vliestüchern behandelt worden sind, auf welche zuvor alkoholbasierte Färbemittel mit den laufenden Nummern 3a, 3b, 4, 5, 6, 14, 15, 16, 20, 21 b, 22 und 24 - 28 aufgetragen worden sind, haben vor dieser Färbebehandlung eine Vorbehandlung mit einem Vliestuch erhalten, auf welches ein Überzugsmittel in Form eines Lackes, basierend auf Schellack oder Kopal In Verbindung mit Ethanol aufgebracht worden ist. Zur Behandlung wurden Eier herangezogen, die zuvor gekocht worden sind. Sofern die laufende Nummer der Versuche eine zusätzliche Angabe "a" oder "b" enthält, deutet dieses auf einen Versuch hin, der doppelt ausgeführt wurde, wobei bei der Anzahl der geprüften Eier bzw. der durchgefärbten Eierschalen oder dem Merkmal der angefärbten Hände dann ebenfalls zwischen den Versuchen "a" bzw. "b" differenziert wird. Die Zeile "Schale durchgefärbt" liefert vor dem Querstrich eine Aussage zu der Anzahl der Eier, bei denen eine Durchfärbung erkennbar war, und nach dem Querstrich eine Aussage zu der Anzahl der Eier, deren Schale sehr stark durchgefärbt worden ist, d.h. hierbei konnte eine starke Verfärbung des Ei-Inneren beobachtet werden.

Alle für die Färbesysteme und Lacksysteme verwendeten Inhaltsstoffe genügen den lebensmittelrechtlichen Ansprüchen laut einschlägiger Lebensmittelgesetzgebung und entsprechen somit den Bedingungen für den Einsatz in oder auf Lebensmitteln. Bei einem alkoholbasierten System als Harz- bzw. Lackgrundlage kommen insbesondere die bereits genannten Trägerstoffe Schellack (E 904) und Kopal in Betracht. Als Lösemittel für Schellack wurde reiner Alkohol in 96 %-iger Konzentration und für Kopal in 100 %-iger Konzentration eingesetzt. Als Farbstoffe kamen die oben genannten Stoffe in Betracht, die eine ausreichende Löslichkeit in Ethanol aufwiesen.

### Anfärben des Ei-Inneren

Durch Anwendung des Überzugmittels in Form eines farblosen Lackes vor dem Einfärben des Eies mit der Färbelösung sind die Poren des Eies sowie auch feinere Risse geschlossen worden, wodurch bei der nachfolgenden Einfärbung nur noch in Ausnahmefällen, d.h. beispielsweise bei sehr groben Verletzungen der Eierschale, alkoholbasierte Färbemittel in das Ei-Innere eingedrungen sind. Beispiele hierfür sind die Versuchsreihen 3a, 3b sowie 19, 21 b, 25 und 28. Bei diesen Versuchsreihen trat praktisch keine Anfärbung im Ei-Inneren auf.

Weiterhin wurde überprüft, welchen Einfluss verschiedene Gehalte an Schellack bzw. Kopal in dem vor dem Färbevorgang aufgebrachten Überzugsmittel auf die Wirkung desselben in Bezug auf die Einfärbung des Ei-Inneren haben. Es zeigte sich, dass ein Gehalt von 10 Gew.-% Schellack im Überzugsmittel, wobei der restliche Bestandteil des Überzugsmittels 96%iges Ethanol aufwies, gemäß der Versuche 3a, 3b, 6, 14, 21 b und 28 völlig ausreichend ist, um jeweils ein Durchfärben der Eierschale zu verhindern. Im Falle des Kopals wurden Gehalte von 5 Gew.-% gemäß der Versuche 24 und 26 bzw. 10 Gew.-% gemäß der Versuche 25 und 27 im Überzugsmittel getestet, wobei der restliche Bestandteil des Überzugsmittels jeweils 100%iges Ethanol aufwies. Es wurde festgestellt, dass Kopal eine geringere Wirkung in Bezug auf die Abdichtung der Poren und Risse in der Eierschale ausübt als Schellack, bzw. höhere Gehalte an Kopal erforderlich wären, um ein ähnliches Ergebnis zu erhalten. Bei Gehalten von 10 Gew.-% Schellack bzw. Kopal in einem Vorbehandlungslack bzw. Überzugsmittel wurde keine Anfärbung des Ei-Inneren beobachtet. Selbst bei farbigen Lacken, die sich hinsichtlich der Einfärbung des Ei-Inneren eher als ungünstig erweisen, konnte durch eine derartige Vorbehandlung das Anfärben des Ei-Inneren vennieden werden.

### Einfluss der Färbemittelzusammensetzung auf das Durchfärben der Schale und das Abfärben auf die Hände

Die verwendeten alkoholbasierten Färbemittel unterscheiden sich bezüglich der eingesetzten Farbstoffe und der verwendeten Komponenten Schellack oder Kopal für die Färbemittel- bzw. Überzugsmittelzusammensetzung zur Vorbehandlung des Eies hinsichtlich ihres Durchfärbeverhaltens auf das Ei-Innere bzw. des Abfärbeverhaltens auf die Hände des Anwenders. Nur alkoholbasierte Färbemittel, in denen die Farbstoffe FDC-Blau und Patentblau enthalten sind, weisen ein ähnliches Verhalten auf. Es wurde herausgefunden, dass Erythrosin besser im Zusammenhang mit Schellack angewendet werden kann, während Patentblau bessere Ergebnisse mit Kopal liefert.

Beispielsweise zeigt der Farbstoff Patentblau in einem Bereich von 1 Gew.-% in der Färbelösung gemäß Versuch 16 bei Anwendung von 10 Gew.-% Schellack, dass ein starkes Abfärben auf die Hände auftritt. Bei einem Gehalt von 0,5 Gew.-% Patentblau gemäß Versuch 12 tritt dagegen noch keine Anfärbung der Hände auf. Es ist offensichtlich erforderlich, das Verhältnis Farbstoff, in diesem Fall Patentblau, zum Trägerstoff in den in der Tabelle 1 angegebenen Bereichen zu wählen, damit das alkoholbasierte Färbemittel in hinreichender Form physikalisch auf der Oberfläche eines Eies fixiert werden kann, um ein Ablösen des alkoholbasierten Färbemittels, beispielsweise durch die Feuchtigkeit der Hand eines Benutzers zu vermeiden.

Bei der Betrachtung der Versuche mit dem Farbstoff Erythrosin kann man feststellen, dass bei einem alkoholbasierten Färbemittel unter Verwendung von 1 Gew.-% Erythrosin und 10 Gew.-% Schellack gemäß der Versuche 2, 23 und 25 kein Abfärben des alkoholbasierten Färbemittels auf die Hände stattfindet.

Anders dagegen verhält es sich beim Einsatz von Kopal. Hier zeigt sich, dass eine Färbemischung unter Verwendung von 12,5 Gew.-% Kopal und 0,5 Gew.-% Patentblau gemäß Versuch 6 auf einem Tuch derart gestaltet sein kann, dass kein Abfärben des alkoholbasierten Färbemittels auf die Hände des Benutzers stattfindet. Wird dagegen die Farbstoffmenge bei 12,5 Gew.-% Kopal auf 0,75 Gew.-% Patentblau gemäß Versuch 7 erhöht, ist bereits ein starkes Abfärben auf die Hände zu verzeichnen. Insofern kann auch für die Kombination Kopal/Patentblau geschlussfolgert werden, dass es besonders vorteilhafte Trägerstoff-/Farbstoff-Kombinationen gibt, um das Durchfärben der Schale und das Abfärben des alkoholbasierten Färbemittels auf die Hände zu vermeiden.

In den Versuchsreihen 12 bis 14 sind alkoholbasierte Färbemittel unter Verwendung des Farbstoffes Patentblau mit unterschiedlichen Anteilen an Schellack und Kopal als Trägerstoff für das alkoholbaslerte Färbemittel untersucht worden. Die Ergebnisse belegen, dass ein Gesamtgehalt an Trägerstoff von 10 Gew.-% gemäß Versuch 14, der sich wiederum aus 75 Gew.-% Schellack und 25 Gew.-% Kopal zusammensetzt, ausreichend ist, um hinreichende Färbeergebnisse zu erhalten, d.h. dass das Durchfärben der Eierschale und das Abfärben des alkoholbasierten Färbemittels auf die Hände vermieden werden.

### Einfluss des Gehaltes an Trägerstoffen Schellack bzw. Kopal im alkoholbasierten Farbemittel

Die Ergebnisse der in Tabelle 1 dargestellten Versuchsreihen belegen, dass Gehalte von minimal ca. 10 Gew.-% Schellack bzw. 12,5 Gew.-% Kopal jeweils in Verbindung mit den zuvor genannten Farbstoffen zu optimalen Färbeergebnissen führen können. Wird der Gehalt an Trägerstoff deutlich abgesenkt, wie z. B. in den Versuchen 17, 18a und 18b im Falle des Farbstoffes Erythrosins, so wird bereits ein Abnehmen der Wasserfestigkeit der Färbung festgestellt. Im Falle des Patentblaus in Kombination mit Kopal reichen hingegen 6,25 Gew.-% gemäß der Versuche 21 a und 21 b aus, um ein Abfärben des Färbemittels auf die Hände des Benutzers trotz Anwesenheit von Feuchtigkeit zu verhindern.

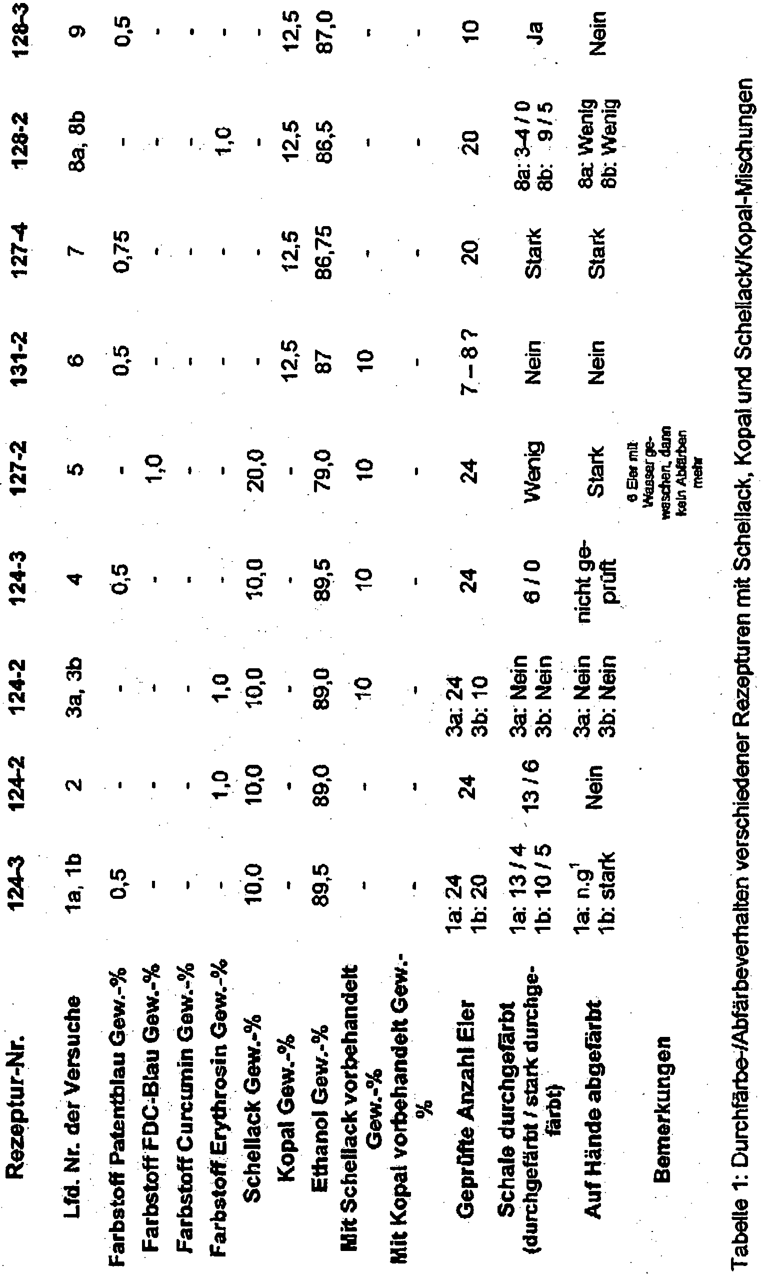

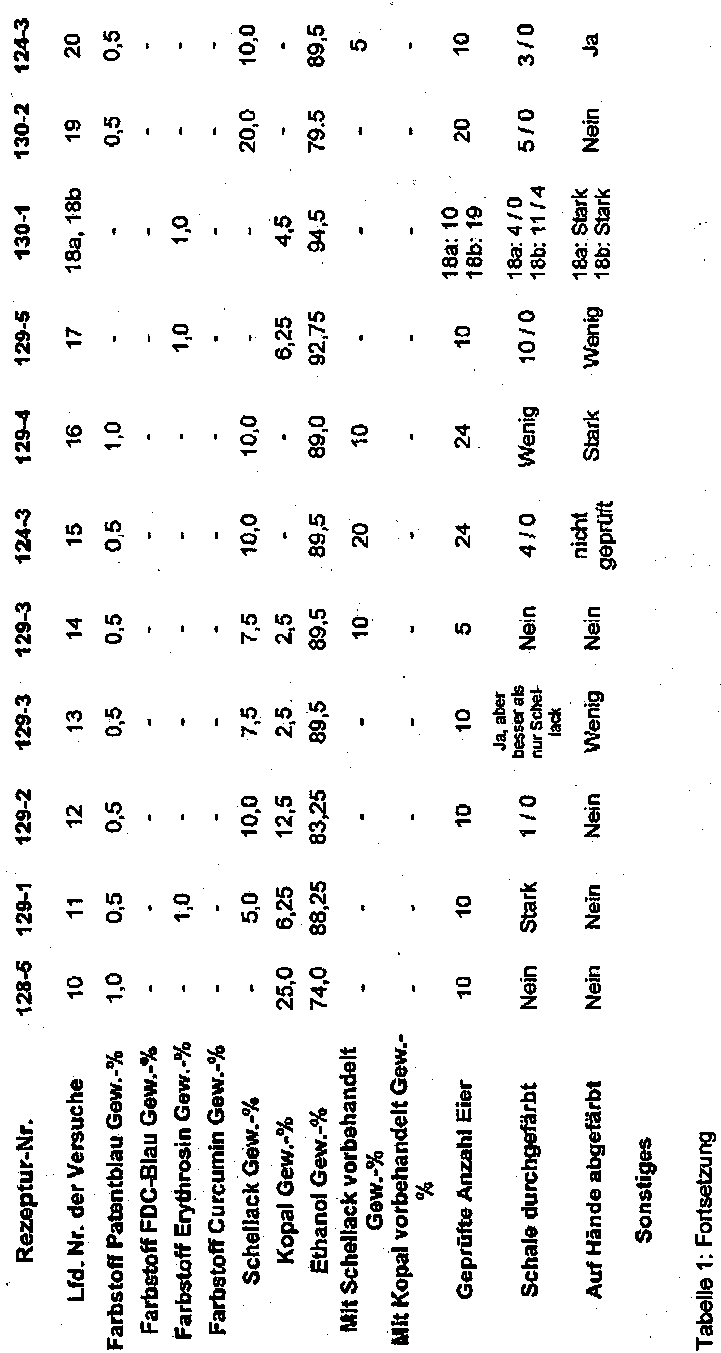

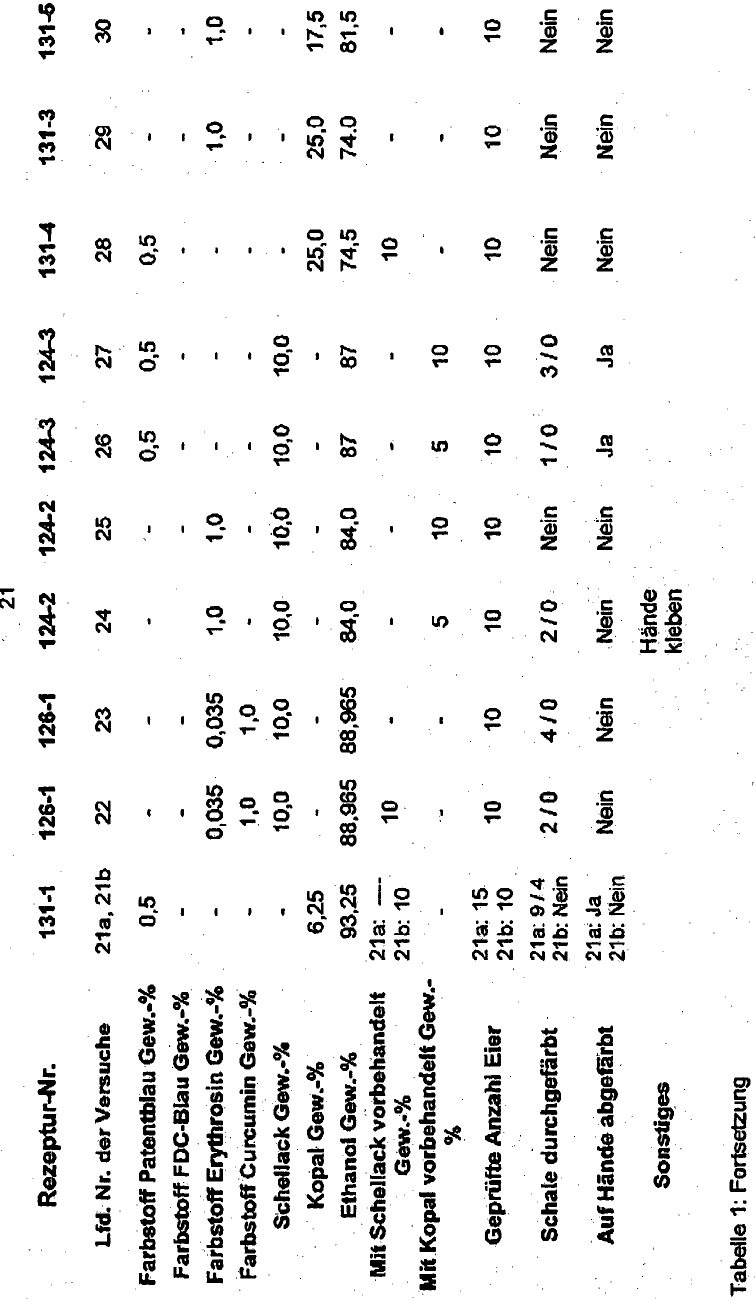

## Patentansprüche

1. Verfahren zur Behandlung von Eiern, wobei über mindestens ein flächiges Material mindestens ein alkoholbasiertes Färbemittel und/oder mindestens ein alkoholbasiertes Überzugsmittel auf das Ei übertragen wird, wobei das alkoholbasierte Färbemittel und/oder alkoholbasierte Überzugsmittel mindestens ein alkoholbasiertes Lösemittel und mindestens einen Trägerstoff für einen Farbstoff und/oder ein Farbpigment und/oder einen Farbpartikel im Falle des alkoholbasierten Färbemittels beziehungsweise mindestens eine Lackkomponente im Falle des alkoholbasierten Überzugsmittels umfassen, wobei zur Herstellung des alkoholbasierten Färbemittels und/oder des alkoholbasierten Überzugsmittels Ethanol verwendet wird, und wobei der mindestens eine Trägerstoff beziehungsweise die mindestens eine Lackkomponente ausgewählt ist aus einer Gruppe umfassend Schellack und/oderKopal, wobei der mindestens eine Trägerstoff beziehungsweise die mindestens eine Lackkomponente in einer Menge in einem Bereich von 2 Gew.-% bis 30 Gew.-%, bezogen auf das Gesamtgewicht des alkoholbasierten Färbemittels beziehungsweise des alkoholbasierten Überzugsmittels, eingesetzt wird.

2. Verfahren nach Anspruch 1, **dadurch gekennzeichnet, dass** das flächige Material auf mindestens einer Seite mit dem mindestens einen alkoholbasierten Färbemittel und/oder mit dem mindestens einen alkoholbasierten Überzugsmittel versehen zur Verfügung gestellt wird.

3. Verfahren nach Anspruch 1 oder 2, **dadurch gekennzeichnet, dass** vor Übertragung des alkoholbasierten Färbemittels und/oder alkoholbasierten Überzugsmittels durch das flächige Material das flächige Material auf mindestens einer Seite mit dem mindestens einen alkoholbasierten Färbemittel und/oder mit dem mindestens einen alkoholbasierten Überzugsmittel versehen wird.

4. Verfahren nach einem der vorhergehenden Ansprüche, umfassend mindestens die folgenden Schritte:
- Bereitstellung mindestens eines flächigen Materials;
- In-Kontakt-Bringen des Eies mit mindestens einem flächigen Material; und
- Übertragung des alkoholbasierten Färbemittels und/oder des alkoholbasierten Überzugsmittels auf das Ei.

5. Verfahren nach einem der vorhergehenden Ansprüche, **dadurch gekennzeichnet, dass** das alkoholbasierte Überzugsmittel auf das Ei übertragen wird derart, dass das Überzugsmittel vor dem Auftrag und/oder während des Auftrags und/oder nach dem Auftrag eines Färbemittels auf das Ei übertragen wird.

6. Verfahren nach einem der vorhergehenden Ansprüche, **dadurch gekennzeichnet, dass** das In-Kontakt-Bringen des Eies mit dem alkoholbasierten Färbemittel und/oder dem alkoholbasierten Überzugsmittel mehrfach erfolgt.

7. Verfahren nach einem der vorhergehenden Ansprüche, **dadurch gekennzeichnet, dass** das flächige Material als ein Vlies, umfassend vorwiegend natürliche Fasern und/oder synthetische Fasern und/oder Kombinationen hieraus, ausgebildet wird.

8. Verfahren nach einem der vorhergehenden Ansprüche, **dadurch gekennzeichnet, dass** das flächige Material ein- oder mehrlagig ausgebildet wird.

9. Verfahren nach einem der vorhergehenden Ansprüche, **dadurch gekennzeichnet, dass** zur Herstellung des alkoholbasierten Färbemittels
- mindestens ein Farbstoff und/oder mindestens ein Farbpigment und/oder mindestens ein Farbpartikel;
- mindestens ein Trägerstoff für den Farbstoff und/oder das Farbpigment und/oder die Farbpartikel; und
- mindestens ein alkoholbasiertes Lösemittel
verwendet werden.

10. Verfahren nach einem der vorhergehenden Ansprüche, **dadurch gekennzeichnet, dass** zur Herstellung des alkoholbasierten Färbemittels als Farbstoff mindestens ein Lebensmittelfarbstoff, ausgewählt aus der Gruppe umfassend Curcumin, Patentblau, FDC-Blau und/oder Erythrosin, verwendet wird.

11. Verfahren nach einem der vorhergehenden Ansprüche, **dadurch gekennzeichnet, dass** zur Herstellung des alkohölbasierten Färbemittels
- mindestens ein Farbstoff in einem Bereich zwischen 0,01 Gew.-% bis 3 Gew.-% und/oder mindestens ein Farbpigment und/oder mindestens ein Farbpartikel in einem Bereich zwischen 1 Gew.-% bis 15 Gew.-%;
- mindestens ein Trägerstoff in einem Bereich zwischen 2,5 Gew.-% bis 30 Gew.-%; und
- mindestens ein alkoholbasiertes Lösemittel in einem Bereich zwischen 65 Gew.-% bis 97 Gew.-%,
wobei die Gewichtsprozente jeweils bezogen sind auf das Gesamtgewicht des Färbemittels, verwendet werden.

12. Verfahren nach einem der Ansprüche 1 bis 11, **dadurch gekennzeichnet, dass** zur Herstellung des alkoholbasierten Überzugsmittels,
- mindestens eine Lackkomponente in einem Bereich zwischen 2 Gew.-% bis 30 Gew.-%, und
- mindestens ein alkoholbasiertes Lösemittel in einem Bereich zwischen 70 Gew.-% bis 98 Gew.-%,
wobei die Gewichtsprozente jeweils bezogen sind auf das Gesamtgewicht des Überzugsmittels, verwendet werden.

13. Verfahren nach einem der vorhergehenden Ansprüche, **dadurch gekennzeichnet, dass** das Aufbringen des alkoholbasierten Färbemittels und/oder des alkoholbasierten Überzugsmittels auf das flächige Material durch Rakeln, Tauchen, Besprühen oder Kiss-Roll-Verfahren erfolgen.

14. Vorrichtung zur Behandlung von Eiern, **dadurch gekennzeichnet, dass** diese mindestens ein, auf mindestens einer Seite mit mindestens einem alkoholbasierten Färbemittel und/oder mindestens einem alkoholbasierten Überzugsmittel gemäß einem der Ansprüche 1 bis 13 versehenes flächiges Material umfasst.

15. Vorrichtung nach Anspruch 14, **dadurch gekennzeichnet, dass** das alkoholbasierte Färbemittel umfasst
- mindestens einen Farbstoff in einem Bereich zwischen 0,01 Gew.-% bis 3 Gew.-%, und/oder mindestens ein Farbpigment und/oder mindestens ein Farbpartikel in einem Bereich zwischen 1 Gew.-% bis 15 Gew.-%;
- mindestens einen Trägerstoff in einem Bereich zwischen 2,5 Gew.-% bis 30 Gew.-%; und
- mindestens ein alkoholbasiertes Lösemittel in einem Bereich zwischen 65 Gew.-% bis 97 Gew.-%,
wobei die Gewichtsprozente jeweils bezogen sind auf das Gesamtgewicht des Färbemittels.

16. Vorrichtung nach Anspruch 14 bis 15, **dadurch gekennzeichnet, dass** ein Lebensmittelfarbstoff ausgewählt ist aus einer Gruppe umfassend Curcumin, Patentblau, FDC-Blau oder Erythrosin.

17. Vorrichtung nach Anspruch 14 bis 16, **dadurch gekennzeichnet, dass** das flächige Material ein alkoholbasiertes Überzugsmittel umfasst, umfassend
- mindestens eine Lackkomponente in einem Bereich zwischen 2 Gew.-% bis 30 Gew.-%, und
- mindestens ein alkoholbasiertes Lösemittel in einem Bereich zwischen 70 Gew.-% bis 98 Gew.-%,
wobei die Gewichtsprozente jeweils bezogen sind auf das Gesamtgewicht des Überzugsmittels.

18. Vorrichtung nach Anspruch 14 bis 17, **dadurch gekennzeichnet, dass** das flächige Material als ein Vlies, umfassend vorwiegend natürliche Fasern und/oder synthetische Fasern und/oder Kombinationen hieraus ausgebildet ist.

19. Vorrichtung nach Anspruch 14 bis 18, **dadurch gekennzeichnet, dass** das flächige Material ein- oder mehrlagig ausgebildet ist.

20. Alkoholbasiertes Färbemittel und/oder alkoholbasiertes Überzugsmittel gemäß einem der Ansprüche 1 bis 13.

21. Alkoholbasiertes Färbemittel gemäß Anspruch 20 zur Behandlung von Eiern, umfassend
- mindestens einen Farbstoff in einem Bereich zwischen 0,01 Gew.-% bis 3 Gew.-% und/oder mindestens ein Farbpigment und/oder mindestens einen Farbpartikel in einem Bereich zwischen 1 Gew.-% bis 15 Gew.-%,
- mindestens einen Trägerstoff in einem Bereich zwischen 2,5 Gew.-% bis 30 Gew.-%; und
- mindestens ein alkoholbasiertes Lösemittel in einem Bereich zwischen 65 Gew.-% bis 97 Gew.-%,
wobei die Gewichtsprozente jeweils bezogen sind auf das Gesamtgewicht des Färbemittels.

22. Alkoholbasiertes Überzugsmittel gemäß Anspruch 20 zur Behandlung von Eiern, umfassend
- mindestens eine Lackkomponente in einem Bereich zwischen 2 Gew.-% bis 30 Gew.-%, und
- mindestens ein alkoholbasiertes Lösemittel in einem Bereich zwischen 70 Gew.-% bis 98 Gew.-%,
wobei die Gewichtsprozente jeweils bezogen sind auf das Gesamtgewicht des Überzugsmittels.

23. Verwendung eines flächigen Materials, hergestellt mit einer Vorrichtung nach einem der Ansprüche 14 bis 19 zur Behandlung von Eiern durch Übertragung eines alkoholbasierten Färbemittels und/oder eines alkoholbasierten Überzugsmittels auf ein Ei.

## Claims

1. Method for treatment of eggs, wherein at least one alcohol-based colouring agent and/or at least one alcohol-based coating agent are transferred to the egg by means of a sheet material, wherein the alcohol-based colouring agent and/or alcohol-based coating agent comprise at least one alcohol-based solvent and at least one carrier substance for a dye and/or a colouring pigment and/or a colouring particle in the case of the alcohol-based colouring agent or at least one varnish component in the case of the alcohol-based coating agent, wherein ethanol is used for production of the alcohol-based colouring agent and/or the alcohol-based coating agent, and wherein the at least one carrier substance or the at least one varnish component is selected from a group comprising shellac and/or copal, wherein the at least one carrier substance or the at least one varnish component is used in a quantity in a range of from 2 wt% to 30 wt%, related to the total weight of the alcohol-based colouring agent or the alcohol-based coating agent respectively.

2. Method according to claim 1, **characterised in that** the sheet material is made available coated on at least one side with the at least one alcohol-based colouring agent and/or with the at least one alcohol-based coating agent.

3. Method according to claim 1 or 2, **characterised in that** before the alcohol-based colouring agent and/or alcohol-based coating agent is transferred by the sheet material, the sheet material is coated on at least one side with the at least one alcohol-based colouring agent and/or with the at least one alcohol-based coating agent.

4. Method according to one of the preceding claims, comprising at least the following steps:
- providing at least one sheet material;
- bringing the egg into contact with at least one sheet material; and
- transferring the alcohol-based colouring agent and/or the alcohol-based coating agent to the egg.

5. Method according to one of the preceding claims, **characterised in that** the alcohol-based coating agent is transferred to the egg such that the coating agent is transferred to the egg before the application and/or during the application and/or after the application of a colouring agent.

6. Method according to one of the preceding claims, **characterised in that** the egg is brought into contact with the alcohol-based colouring agent and/or the alcohol-based coating agent a plurality of times.

7. Method according to one of the preceding claims, **characterised in that** the sheet material is embodied in the form of a fibrous web comprising predominantly natural fibres and/or synthetic fibres and/or combinations hereof.

8. Method according to one of the preceding claims, **characterised in that** the sheet material is embodied with one or more layers.

9. Method according to one of the preceding claims, **characterised in that** for production of the alcohol-based colouring agent use is made of
- at least one dye and/or at least one colouring pigment and/or at least one colouring particle;
- at least one carrier substance for the dye and/or the colouring pigment and/or the colouring particle; and
- at least one alcohol-based solvent.

10. Method according to one of the preceding claims, **characterised in that** for the production of the alcohol-based colouring agent, at least one food dye is used as the dye, selected from the group comprising curcumin, patent blue, FDC blue and/or erythrosin.

11. Method according to one of the preceding claims, **characterised in that** for production of the alcohol-based colouring agent use is made of
- at least one dye in a range of between 0.01 wt% to 3 wt% and/or at least one colouring pigment and/or at least one colouring particle in a range of between 1 wt% to 15 wt%;
- at least one carrier substance in a range of between 2.5 wt% to 30 wt%; and
- at least one alcohol-based solvent in a range of between 65 wt% to 97 wt%,
wherein the percentages by weight are in each case related to the total weight of the colouring agent.

12. Method according to one of claims 1 to 11, **characterised in that** for production of the alcohol-based coating agent use is made of
- at least one varnish component in a range of between 2 wt% to 30 wt%, and
- at least one alcohol-based solvent in a range of between 70 wt% to 98 wt%,
wherein the percentages by weight are in each case related to the total weight of the coating agent.

13. Method according to one of the preceding claims, **characterised in that** the application of the alcohol-based colouring agent and/or the alcohol-based coating agent to the sheet material is effected by doctoring, dipping, spraying or kiss-rolling.

14. Device for treatment of eggs, **characterised in that** this comprises at least one sheet material coated on at least one side with at least one alcohol-based colouring agent and/or at least one alcohol-based coating agent according to one of claims 1 to 13.

15. Device according to claim 14, **characterised in that** the alcohol-based colouring agent comprises
- at least one dye in a range of between 0.01 wt% to 3 wt%, and/or at least one colouring pigment and/or at least one colouring particle in a range of between 1 wt% to 15 wt%;
- at least one carrier substance in a range of between 2.5 wt% to 30 wt%; and
- at least one alcohol-based solvent in a range of between 65 wt% to 97 wt%,
wherein the percentages by weight are in each case related to the total weight of the colouring agent.

16. Device according to claims 14 to 15, **characterised in that** a food dye is selected from a group comprising curcumin, patent blue, FDC blue or erythrosin.

17. Device according to claims 14 to 16, **characterised in that** the sheet material comprises an alcohol-based coating medium, comprising
- at least one varnish component in a range of between 2 wt% to 30 wt%, and
- at least one alcohol-based solvent in a range of between 70 wt% to 98 wt%,
wherein the percentages by weight are in each case related to the total weight of the coating agent.

18. Device according to claims 14 to 17, **characterised in that** the sheet material is embodied in the form of a fibrous web comprising predominantly natural fibres and/or synthetic fibres and/or combinations hereof.

19. Device according to claims 14 to 18, **characterised in that** the sheet material is embodied with one or more layers.

20. Alcohol-based colouring agent and/or alcohol-based coating agent according to one of claims 1 to 13.

21. Alcohol-based colouring agent according to claim 20 for treatment of eggs, comprising
- at least one dye in a range of between 0.01 wt% to 3 wt%, and/or at least one colouring pigment and/or at least one colouring particle in a range of between 1 wt% to 15 wt%;
- at least one carrier substance in a range of between 2.5 wt% to 30 wt%; and
- at least one alcohol-based solvent in a range of between 65 wt% to 97 wt%,
wherein the percentages by weight are in each case related to the total weight of the colouring agent.

22. Alcohol-based coating agent according to claim 20 for treatment of eggs, comprising
- at least one varnish component in a range of between 2 wt% to 30 wt%, and
- at least one alcohol-based solvent in a range of between 70 wt% to 98 wt%,
wherein the percentages by weight are in each case related to the total weight of the coating agent.

23. Use of a sheet material, produced with a device according to one of claims 14 to 19 for treatment of eggs by transferring an alcohol-based colouring agent and/or an alcohol-based coating agent to an egg.

## Revendications

1. Procédé de traitement des oeufs, dans lequel au moins un agent colorant à base d'alcool et / ou un matériau de recouvrement à base d'alcool est appliqué sur l'oeuf à l'aide d'au moins un matériau en feuille, l'agent colorant à base d'alcool et / ou le matériau de recouvrement à base d'alcool comportant au moins un solvant à base d'alcool et respectivement au moins une substance de support pour une teinte et / ou un pigment et / ou une particule colorante dans le cas de l'agent colorant et au moins un composant de laque dans le cas du matériau de recouvrement, dans lequel de l'éthanol est utilisé pour la production de l'agent colorant à base d'alcool et / ou du matériau de recouvrement à base d'alcool, et dans lequel l'au moins une substance de support ou l'au moins un composant de laque est choisi dans un groupe constitué de la gomme-laque et du copal, dans lequel l'au moins une substance de support ou l'au moins un composant de laque est présent à une concentration massique compris entre 2% et 30%, rapporté à la masse totale respectivement de l'agent colorant à base d'alcool et / ou du matériau de recouvrement à base d'alcool.

2. Procédé selon la revendication 1, **caractérisé en ce que** le matériau en feuille est mis à disposition après être imprégné sur au moins une face avec l'agent colorant à base d'alcool et / ou le matériau de recouvrement à base d'alcool.

3. Procédé selon les revendications 1 et 2, **caractérisé en ce qu'**avant l'application de l'agent colorant à base d'alcool et / ou du matériau de recouvrement à base d'alcool, à l'aide du matériau en feuille, le matériau en feuille est imprégné avec l'agent colorant à base d'alcool et / ou le matériau de recouvrement à base d'alcool.

4. Procédé selon l'une quelconque des revendications précédentes, comportant au moins les étapes suivantes :
• Mise à disposition d'au moins un matériau en feuille
• Mise en contact de l'oeuf avec au moins un matériau en feuille
• Application de l'agent colorant à base d'alcool et / ou du matériau de recouvrement à base d'alcool sur l'oeuf

5. Procédé selon l'une quelconque des revendications précédentes, **caractérisé en ce que** le matériau de recouvrement à base d'alcool est appliqué sur l'oeuf de telle sorte que l'application du matériau de recouvrement ait lieu avant et / ou pendant et / ou après l'application de l'agent colorant.

6. Procédé selon l'une quelconque des revendications précédentes, **caractérisé en ce que** la mise en contact de l'oeuf avec l'agent colorant à base d'alcool et / ou le matériau de recouvrement à base d'alcool se produit plusieurs fois.

7. Procédé selon l'une quelconque des revendications précédentes, **caractérisé en ce que** le matériau en feuille est un tissu composé principalement des fibres naturelles, des fibres synthétiques ou une combinaison de fibres naturelles et de fibres synthétiques.

8. Procédé selon l'une quelconque des revendications précédentes, caractérisé en ce le matériau en feuille est constitué d'une ou plusieurs couches

9. Procédé selon l'une quelconque des revendications précédentes, **caractérisé en ce que** pour la réalisation de l'agent colorant à base d'alcool, les ingrédients suivants sont utilisés :
• Au moins une teinte et / ou au moins un pigment et / ou au moins une particule colorante
• Au moins une substance support pour la teinte, le pigment et / ou la particule colorante
• Au moins un solvant à base d'alcool

10. Procédé selon l'une quelconque des revendications précédentes, **caractérisé en ce que** pour la fabrication de l'agent colorant à base d'alcool, au moins un colorant alimentaire est utilisé, issu du groupe constitué du curcumin, du bleu patenté V, du bleu FDC et de l'erythrosine.

11. Procédé selon l'une quelconque des revendications précédentes, caractérisé en ce pour la fabrication de l'agent coloré à base d'alcool, les concentrations massiques suivantes sont mises en oeuvre, sachant que les pourcentages massiques se rapportent à la masse totale de l'agent colorant :
• Au moins une teinte avec une concentration massique comprise entre 0.01% et 3% et / ou un pigment et / ou une particule colorante avec une concentration massique comprise entre 1% et 15%
• Au moins une substance de support avec une concentration massique comprise entre 2,5% et 30%
• Au moins un solvant à base d'alcool avec une concentration massique comprise entre 65% et 97%

12. Procédé selon l'une quelconque des revendications 1 à 11, **caractérisé en ce que** pour la fabrication du matériau de recouvrement à base d'alcool, les concentrations massiques suivantes sont mises en oeuvre, sachant que les pourcentages massiques se rapportent à la masse totale du matériau de recouvrement :
• Au moins un composant de laque avec une concentration massique comprise entre 2% et 30%
• Au moins un solvant à base d'alcool avec une concentration massique comprise entre 70% et 98%

13. Procédé selon l'une quelconque des revendications précédentes, **caractérisé en ce que** l'imprégnation de l'agent colorant à base d'alcool et / ou du matériau de recouvrement à base d'alcool sur le matériau en feuille se fait par raclage, immersion, aspersion et / ou selon le procédé kiss-roll.

14. Dispositif pour le traitement des oeufs, **caractérisé en ce qu'**il comporte au moins un matériau en feuille selon l'une des revendications 1 à 13, imprégné sur au moins une face avec au moins un agent colorant à base d'alcool et / ou au moins un matériau de recouvrement à base d'alcool.

15. Dispositif selon la revendication 14, **caractérisé en ce que** l'agent colorant à base d'alcool comprend les éléments suivants, sachant que les concentrations massiques se rapportent à la masse totale de l'agent colorant :
• Au moins une teinte avec une concentration massique comprise entre 0.01% et 3% et / ou au moins un pigment et / ou au moins une particule colorante avec une concentration massique comprise entre 1% et 15%
• Au moins une substance support avec une concentration massique comprise entre 2,5% et 30%
• Au moins un solvant à base d'alcool avec une concentration massique comprise entre 65% et 97%

16. Dispositif selon les revendications 14 à 15, **caractérisé en ce qu'**un colorant alimentaire est choisi dans un groupe constitué de la curcumine, du bleu patenté V, du bleu FDC et de l'érythrosine.

17. Dispositif selon les revendications 14 à 16, **caractérisé en ce que** le matériau en feuille est imprégné d'un matériau de recouvrement comprenant les éléments suivants, les concentrations massiques se rapportant à la masse totale de l'agent de recouvrement :
• Au moins un composant de laque avec une concentration massique comprise entre 2% et 30%
• Au moins un solvant à base d'alcool avec une concentration massique comprise entre 70% et 98%

18. Dispositif selon les revendications 14 à 17, **caractérisé en ce que** le matériau en feuille est un tissu, composé principalement de fibres naturelles et / ou de fibres synthétiques et / ou d'une combinaison de fibres naturelles et de fibres synthétiques.

19. Dispositif selon les revendications 14 à 18, **caractérisé en ce que** le matériau en feuille est constitué d'une ou de plusieurs couches

20. Agent colorant à base d'alcool et / ou matériau de recouvrement à base d'alcool selon l'une quelconque des revendications 1 à 13

21. Agent colorant à base d'alcool selon la revendication 20 pour le traitement des oeufs, comprenant les composants suivants, les concentrations massiques se rapportant à la masse totale de l'agent colorant :
• Au moins une teinte avec une concentration massique comprise entre 0.01% et 3% et / ou au moins un pigment et / ou au moins une particule colorante avec une concentration massique comprise entre 2,5% et 30%
• Au moins un solvant à base d'alcool avec une concentration massique comprise entre 65% et 97%

22. Matériau de recouvrement à base d'alcool selon la revendication 20 pour le traitement des oeufs, comprenant les composants suivants, les concentrations massiques se rapportant à la masse totale du matériau de recouvrement :
• Au moins un composant de laque avec une concentration massique comprise entre 2% et 30%
• Au moins un solvant à base d'alcool avec une concentration comprise entre 70% et 98%

23. Utilisation d'un matériau en feuille produit à l'aide d'un dispositif couvert par l'une quelconque des revendications 14 à 19, pour le traitement des oeufs par application d'un agent colorant à base d'alcool et / ou d'un matériau de recouvrement à base d'alcool sur un oeuf.
